# EUROPEAN PATENT APPLICATION

(11) **EP 1 739 982 A1**
(43) Date of publication of application: **03.01.2007**
(21) Application number: 06013423.6
(22) Date of filing: 29.06.2006
(51) Int. Cl.: H04N 17/00

(54) **An electronic camera with classification of images according to image quality**

(30) Priority: 30.06.2005 DK 200500976
(71) Applicant: Hasselblad A/S, 2400 Copenhagen NV (DK)
(72) Inventor: Poulsen, Anders, 2840 Holte (DK)
(74) Representative: Johansen, Marianne

(57) **Abstract**

The present invention relates to electronic cameras comprising solid state imaging devices, such as CCDs, CMOS sensors, etc. More particularly, the present invention relates to circuits and techniques for indication of the quality of recorded images. An electronic camera is discloses having a solid state imaging device, a memory for storage of images recorded with the imaging device, and a controller that is adapted to store an image quality parameter value together with a respective image.

## Description

### FIELD OF THE INVENTION

The present invention relates to electronic cameras comprising solid state imaging devices, such as CCDs, CMOS sensors, etc. More particularly, the present invention relates to circuits and techniques for indication of the quality of recorded images.

### BACKGROUND OF THE INVENTION

Electronic cameras comprising solid state imaging devices, such as CCDs, CMOS sensors, etc., are well known in the art. The solid state imaging device has an array of a large number of light sensitive detectors, each of which records the light energy incident on the detector during an exposure period. For example, in a CCD a charge is formed in each detector of the CCD that is proportional to the light energy incident on the detector during an integration period. The recorded light energy values of the detectors are read out of the solid state device and are typically converted to a digital value whereby a digital representation of the recorded image is formed. Each detector represents a pixel of the image, and the pixel value is equal to the digitised recorded light energy value of the corresponding detector.

Thus, the recorded image is divided into a large number of segments, denoted pixels, and with allocated digital values denoted pixel values. For example, a grey tone image may be represented digitally by pixels with one respective pixel value representing the grey tone of the corresponding pixel. Similarly, a colour image may be represented by pixels having three respective pixel values, one for each of the colours red, green, and blue.

In the present context, the term exposure is to be understood in a broad sense as the time period during which an energy sensor is actually sensing the energy. For example, a photographic film is exposed to light whenever light is incident upon it, while a CCD is exposed to light when the pixel elements of the CCD are allowed to integrate light incident upon them.

A colour filter mask may be overlaid the CCD array whereby each light sensitive pixel element in the CCD-array is covered with a colour filter for passing radiation within a specific spectral range corresponding to a specific primary colour, typically red, green and blue. The colour filter mask allows a colour image to be recorded in a single exposure at the expense of resolution.

It is well known in the art to automatically adjust focus and exposure of an electronic camera in order to record an image with optimum settings.

It is also well known to provide an indication of the quality of the image having been recorded to the photographer.

The selection of the best images from a professional photographer's photo session has always been a key to the success of the photographer. Using a conventional photographic film camera, the selection is performed based on film strips positioned on a light table and based on contact sheets with prints of the recorded images.

Using current electronic cameras, the photographer typically takes many more photographs or images than with a conventional film camera. Since no photographic film is consumed, an extra image or extra 100 images may be recorded without added cost of film, processing, contact sheet printing, etc. This encourages the photographer to take many more photos than with conventional film cameras e.g. from a larger number of different angles and distances and with a larger number of different light settings.

Therefore the process of selecting the best images from a photo session becomes a demanding task.

### SUMMARY OF THE INVENTION

It is an object of the present invention to provide an electronic camera with functions facilitating the above-mentioned task of selecting the best images from a set of recorded images.

According to the invention, the above-mentioned and other objects are fulfilled by an electronic camera with an object lens for focusing an image of an object onto an image plane, and a solid state imaging device positioned at the image plane for conversion of the image into electrical signals, and a controller that is adapted to store an image quality parameter value together with electrical signal values of a respective image.

Preferably, the controller is adapted to store an image quality parameter value together with electrical signal values of a respective image in combination with the image for subsequent access of the combination for comparison of a plurality of combinations.

The electronic camera may be a still camera or a video camera.

The solid state imaging device and the controller and associated circuitry may reside in a camera back (sometimes denoted a digital camera back) that attaches like a conventional photographic film holder to a conventional camera.

Preferably, the electronic camera comprises a display for displaying recorded images together with a symbol indicating its image quality parameter value.

Preferably, the electronic camera further comprises a user interface with a user interface element, such as a key, a button, a switch, a touch screen area, voice recognition, etc., for user selection of an image quality parameter value for storage with the respective image.

The recorded images may be divided into a set of quality categories according to their quality parameter values. The images of a specific quality category may e.g. have a specific image quality parameter value (e.g. 1, 2, 3, ...) defining the category in question, or, the quality parameter value of images in a specific category may reside within predetermined limits defining the category in question, etc.

The camera controller may for example be adapted to store each recorded image in the camera image memory, e.g. a memory card, together with the highest possible image quality parameter value immediately upon exposure. The photographer may then evaluate the image by viewing a display of the image, preferably on a display of the camera. The photographer may decide that the recorded image is a top quality image and thus, leave the stored image quality parameter value unchanged, or, the photographer may decide that the recorded image is of a lower quality and therefore operate the user interface element for selection of a lower image quality parameter value for storage together with the image in question, thereby moving the image to a lower quality category.

The camera may for example be adapted to classify recorded images into three different categories, such as a "good" category, a "bad" category, and an "in between" category. Naturally, many more categories may be contemplated.

The controller may further be adapted to calculate an image quality parameter value for a recorded image based on recorded image intensities.

The controller may be adapted for calculation of the quality parameter value of a recorded image based on any image parameter, such as luminance, brightness, contrast, colour balance, white balance, focus, etc., or any combination hereof.

The controller may further be adapted for calculation of the quality parameter value of a recorded image based on one or more histograms of pixel values of the recorded image, e.g. one or more of red, green, and blue intensity values of the pixels, or, one or more corresponding values of another colour filter utilized in the colour filter mask of the solid state imaging sensor.

In an embodiment of the present invention, the controller may be adapted to calculate a plurality of image quality parameters, such as two, three, or more image quality parameters.

Preferably, the electronic camera further comprises a light meter in which case, the controller may further be adapted to calculate an image quality parameter value for a recorded image based on a respective light meter reading and recorded image intensities, e.g. based on a comparison between the light meter reading and recorded image intensities.

For example, the camera may comprise a light meter for measurement of the intensity of light emerging from a small sized area at the centre of the viewing field of the camera. This intensity measurement may be compared with recorded light intensities integrated across a corresponding area of the solid state imaging device. If the difference is within predetermined threshold values, the recorded image is assigned the best quality parameter value. If the difference is larger than the predetermined threshold values, the recorded image is assigned the second best quality parameter value. A plurality of threshold values or threshold value intervals may be defined corresponding to a plurality of image quality categories.

Further the camera may comprise a light meter for measurement of an average intensity of light emerging from a significant part of the viewing field of the camera. This intensity measurement may be compared with recorded light intensities integrated across a corresponding area of the solid state imaging device. Preferably, the controller also applies the weighing function of the light meter during the integration of the corresponding area of the solid state imaging device. If the difference is within predetermined threshold values, the recorded image is assigned the best quality parameter value. If the difference is larger than the predetermined threshold values, the recorded image is assigned the second best quality parameter value. A plurality of threshold values or threshold value intervals may be defined corresponding to a plurality of image quality categories.

Both comparisons may be combined so that a recorded image is assigned the best quality parameter value when both differences are less than the respective smallest threshold values.

The camera may also comprise an auto-focus device with an output signal indicating whether the auto-focus device has been able to focus the image or not. The controller may be adapted to incorporate the value of the auto-focus output signal into the calculated image quality parameter value, e.g. the recorded image quality parameter value may be reduced if the auto-focus device has not been able to focus the image, e.g. whereby the image may be moved from one quality category to the next lower quality category.

The controller may be adapted to compare successive readings from the auto-focus device, and if the successive readings deviate, i.e. if the difference between successive readings lies outside predetermined limits, the recorded image quality parameter value may be reduced, e.g. whereby the image may be moved from one quality category to the next lower quality category.

An appropriately focused recorded image contains large intensity gradients while a defocused image (blurred) has a more smooth intensity profile. Thus, the controller may be adapted to detect gradients in the recorded image and determine whether the recorded image is focused or not. This determination may be compared with the output of the auto-focus device. For example, if the difference is within predetermined threshold values, the record image is assigned the best quality parameter value. If the difference is larger than the predetermined threshold values, the recorded image is assigned the second best quality parameter value. A plurality of threshold values may be defined corresponding to a plurality of image quality categories.

The focus and light meter comparisons may be combined so that a recorded image is assigned the best quality parameter value when both differences are less than the respective smallest threshold values.

In another embodiment, the controller is adapted to incorporate the comparison into the determination of the image quality parameter value by reducing the image quality parameter value if the difference is larger than the predetermined threshold, e.g. whereby the image may be moved from one quality category to the next lower quality category.

The camera may further comprise camera monitoring circuitry outputting indicator signals of the performance of the camera. For example, the camera may comprise circuitry monitoring the operation of the flashlight and signalling whether the flashlight fired during image recording or not. The signal may tell whether the flashlight was not charged properly or whether the flashlight is simply not functioning at all. The camera monitoring circuitry may further comprise a circuit for monitoring the status of one or more batteries in the camera, the operation of the camera shutter, etc.

The controller may further be adapted to incorporate the output signals of camera monitoring circuitry in the calculated image quality parameter value by reducing the image quality parameter value whenever an output signals a malfunction or a non-optimal performance.

The controller may signal an indication of the calculated quality of a recorded image to the user of the camera.

One or more of the calculated image parameter values may be displayed to the operator of the camera, e.g. in the viewer of the camera. Preferably, however, a warning is displayed when the calculated image quality parameter value does not belong to the top quality category.

In a preferred embodiment of the present invention, the camera comprises a sound reproducing element that is controlled by the controller for emission of an audible sound when at least one of the quality parameters is outside a predetermined desirable range. The audible sound may, e.g., be a single distinct sound ("bip") of a specific frequency, a modulated sound, a swept sound, a series of distinct sounds of a specific frequency or of different frequencies, such as a tune, etc, as is well-known in the art of mobile telephones.

A plurality of distinguishable sounds may be related to specific respective qualities of the image. For example, a sound swept from a low frequency to a high frequency may signal that the recorded image is over-exposed while a sound swept from a high frequency to a low frequency may signal that the recorded image is under-exposed.

The camera may further comprise automatic adjustment means for adjustment of the camera in response to the calculated quality parameters so that a new image recording may be performed with optimum settings of the camera. For example, the camera objective may be focused based on the calculated focus parameter, or a diaphragm may be adjusted in response to the calculated brightness.

The camera may further comprise a selector for user selection of a part of the image, and wherein the quality parameter is calculated based solely on electrical signals from pixels within the selected part of the image. Hereby, the operator of the camera may select a part of the viewing field to form basis for the quality parameter determination, e.g. a central part of the viewing field.

As already mentioned, the user of the camera may manually modify the image quality parameter value of a recorded image either immediately upon recording of the image, or, at any time later after storage of the image in the memory. The user may increase the quality parameter value, e.g. whereby the image in question is moved to a better image quality category, or, the user may decrease the quality parameter value, e.g. whereby the image in question is moved to a lower image quality category. The controller may further be adapted to store a symbol indicating whether the user of the camera has adjusted the stored image quality parameter value or the stored image quality parameter value has been set by the camera controller.

When the image memory of the camera is full, the controller may further be adapted to automatically delete an image with the lowest quality parameter value upon recording of a new image in order to free memory space for storage of the new image.

The electronic camera may further comprise a computer interface, and the controller may be adapted to transfer images together with their respective image quality parameter values from the memory to a computer, e.g. via the interface, or by moving a memory card from the camera to a memory card reader of the computer, etc.

The controller may reside in the camera, or in the camera backplane, or, the controller may reside remotely from the camera, for example in a remote control unit or a computer that controls the camera through an interface, e.g. a wireless interface. Further, the controller may be divided into separate controllers, each of which performs a part of the controlling process of the controller, and each of which may reside in the camera, or in the camera backplane, or, remotely from the camera, for example in the remote control unit or the computer.

In a preferred embodiment, the quality parameter value forms a part of the image file name. This makes the quality parameter feature of the camera compatible with any computer application relating to photography without modification of the application software. Thus, the quality parameter value of an image is available as a part of the file name of the image for use during the photographer's selection and finishing process.

In another embodiment, the quality parameter value is provided as a tag in the image file, e.g. as metadata, or, the quality parameter value may be provided in the pixel data. In yet another embodiment, the quality parameter value is provided in a separate file.

### BRIEF DESCRIPTION OF THE DRAWING

The invention will be described in greater detail in the following, by way of example only and with reference to the attached drawings in which:
- Fig. 1: is a blocked schematic of an electronic camera according to the present invention,
- Fig. 2: shows a part of the user interface of a digital camera according to the present invention,
- Fig. 3: shows a displayed image in more detail including a symbol indicating image quality,
- Fig. 4: shows a software light table with images displayed together with their respective symbols indicating their image quality parameter values,
- Fig. 5: is a grey-scale image, and
- Fig. 6: is a histogram of the grey-scale image of Fig. 5.

### DETAILED DESCRIPTION OF PREFERRED EMBODIMENTS

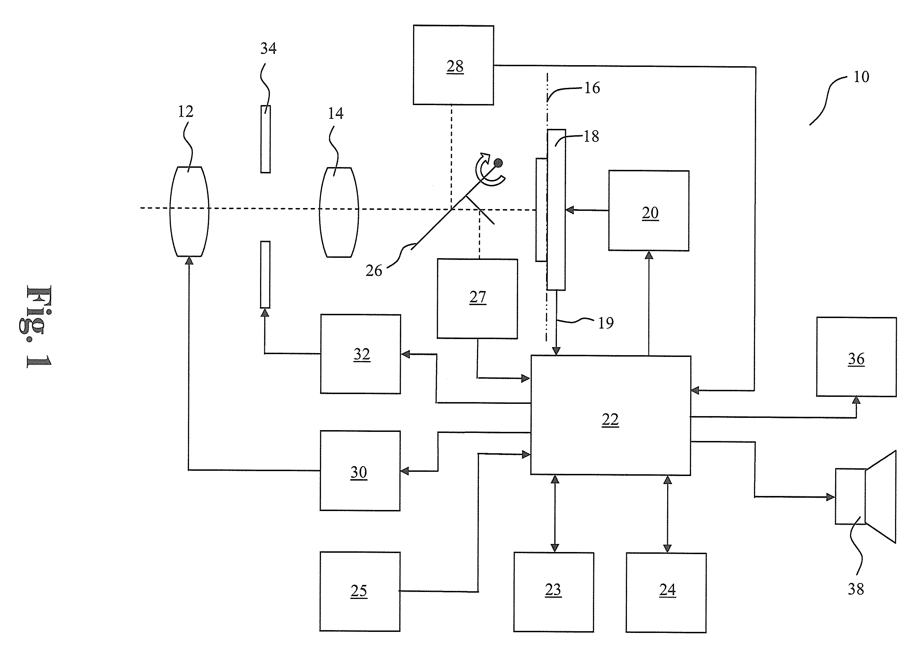

The operational principles of the invention will now be explained with reference to Fig. 1. Fig. 1 is a blocked schematic of an electronic camera 10 according to the present invention. A movable object lens 12 focuses an image of an object (not shown) in co-operation with second lens 14 onto an image plane 16, which coincides with the light sensitive surfaces of the array of light sensitive sensors of the CCD 18. The image recording of the CCD 18 is controlled by a CCD driver 20 that enables and disables integration of light by the CCD light sensors, and also controls shifting of the accumulated charges out of the CCD 18 thereby forming the electrical signals 19. The electrical signals 19 are received by the controller 22 that composes a digital image based on the electrical signals 19 and also provides a quality parameter value of the image and stores the electrical signals 19 of an image together with the respective image quality parameter value in the memory 24. Preferably, the memory 24 resides in a memory card that is inserted into a slot in the camera or camera back. A movable mirror 26 deflects a part of the light from the camera lenses 12, 14 towards a light meter 28 and a part of the light towards an auto-focusing device 27. During exposure, the mirror is tilted as indicated by the arrow allowing the light to pass to the CCD 18. The separation in time between the measurements performed by the light meter 28 and the auto-focusing device 27 and the actual recording of the image may cause discrepancies between the measurements and corresponding parameters calculated from the recorded image, and such discrepancies may indicate that the quality of the recorded image is less than optimal. This will be indicated by the illustrated embodiment based on the above-described comparisons performed by the controller 22 of the camera. Based on a focus parameter value provided by the auto-focusing device 27, a lens drive motor 30 is controlled to move the objective lens 12 to focus the image. Based on a brightness parameter value provided by the light meter 28, a diaphragm drive motor 32 is controlled to adjust the aperture of the diaphragm 34, and the integration time period of the CCD 18 is controlled for optimum exposure of the next image. A warning signal is displayed in a field 36 of the viewer when one of the calculated quality parameters are outside predetermined respective desired ranges. The camera further has a sound reproducing element 38 that is controlled by the controller 22 for emission of an audible sound when at least one of the quality parameters is outside a predetermined desirable range.

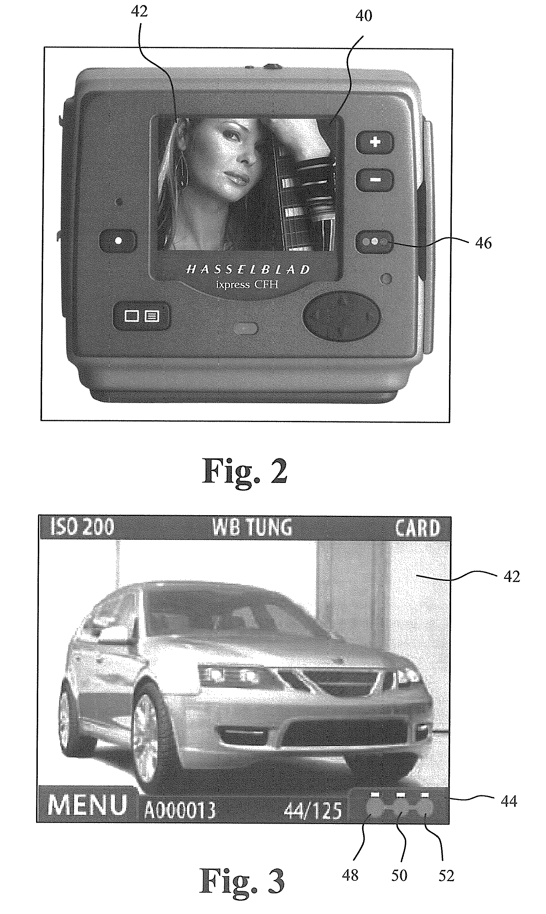

Fig. 2 shows a part of the user interface of a digital still camera. The user interface includes a display 40 for displaying recorded images 42 together with a symbol 44 (shown in Fig. 3) indicating its image quality parameter value. Further, the user interface includes a user interface element 46 for user selection of an image quality parameter value for storage with the respective image. In the illustrated embodiment, the recorded and stored images are classified into three different categories: 1) top quality, 2) middle quality, and 3) low quality. The corresponding image quality parameter value is 1 for the top quality category, 2 for the middle quality category, and 3 for the low quality category.

As shown in Fig. 3, this is indicated by a symbol 44 with three circles arranged one beside the other on a line. For an image belonging to category 1 (top quality), the left most circle 48 of the symbol 44 is green while the other circles 50, 52 are grey. For an image belonging to category 2 (middle quality), the middle circle 50 of the indicator 44 is yellow, and finally, for an image belonging to category 3 (low quality), the right most circle 52 of the indicator 44 is red.

If the stored image quality parameter value has been adjusted by the user of the camera, the coloured circle 48, 50, 52 of the indicator 44 also displays a capital "M" (Manual), or, if the stored image quality parameter value has been set by the camera controller without user intervention, the coloured circle 48, 50, 52 also displays a capital "A" (Automatic).

In an embodiment, the file name of an image comprises the stored image quality parameter and an indicator indicating if the image quality parameter has been manually or automatically set. An exemplary file name may be: "Pic001 M1.jpg", where "M" indicates manual setting of the image quality parameter, and the digit "1" after "M" indicates that the picture Pic001 is top quality. Other examples may be: "Pic105 A3.jpg" indicating that the image quality parameter of picture Pic105 is automatically set to "3"

The camera controller 22 may for example be adapted to store each recorded image in the camera image memory together with the highest possible image quality parameter value (which is 1 (one) in this embodiment) immediately upon exposure. The photographer may then evaluate the image by viewing the image 42 on the display 40 of the camera 10. The photographer may decide that the recorded image 42 is a top quality image and thus, leave the stored image quality parameter value 1 unchanged, or, the photographer may decide that the recorded image 42 is of a lower quality and therefore operate the actuator 46 for selection of a lower image quality parameter value for storage together with the image in question, thereby moving the image to a lower quality category, i.e. with an image quality parameter value equal to 2 or 3.

Pressing the right side of the user interface element 46 moves the displayed image 42 to the next lower category. Likewise, pressing the left side of the user interface element 46 moves the displayed image 42 to the next higher category. The quality category of an image may be changed whenever an image is displayed in the display 42 whether immediately upon recording of the image, or, at a later time upon retrieval of the image from the memory.

As already mentioned, the controller may further be adapted to calculate an image quality parameter value for a recorded image based on recorded image intensities, light meter readings, focus readings, and values of signals from monitoring of the performance of the camera by the camera monitoring circuitry 25.

If everything is as expected, the recorded image is assigned to category 1 (top quality), however, if one of the above-mentioned readings is outside predetermined limits, the recorded image is assigned to category 2 (middle quality).

The electronic camera may further comprise a computer interface 23, and the controller may be adapted to transfer images with their respective image quality parameter values from the memory to a computer through the interface 23.

In a preferred embodiment, the quality parameter value forms a part of the image file name. This makes the quality parameter feature of the camera compatible with any computer application relating to photography without modification of the application software. Thus, the quality parameter value of an image is available as a part of the file name of the image for display together with the respective images making selection of images easier and faster.

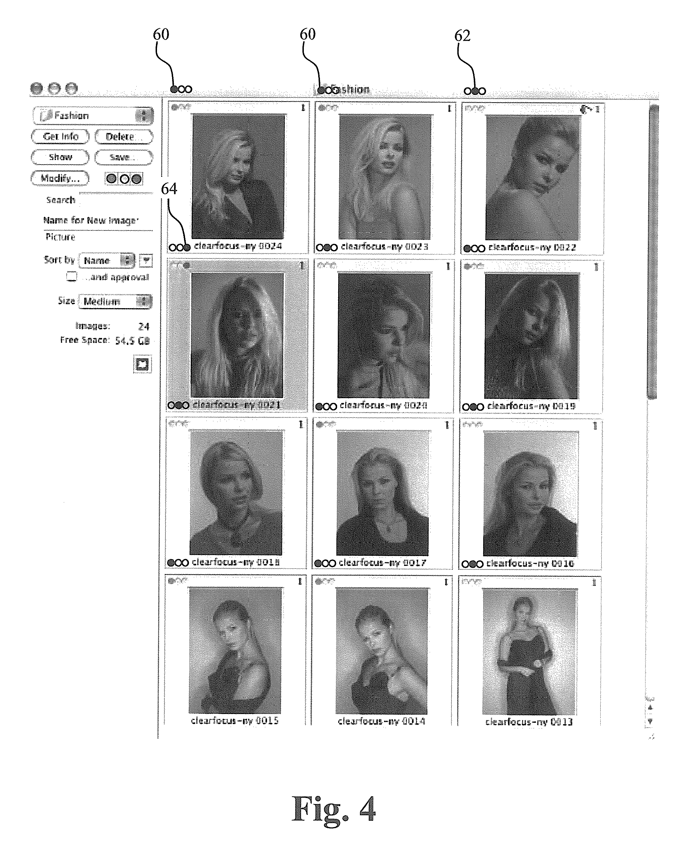

Fig. 4 shows a display window of such a software application displaying recorded images together with their respective symbols indicating image quality as previously described in connection with Fig. 3. For example, it is seen that the two upper left most images are of top quality (indicated by left most green dots 60), and the last image of the upper row is of middle quality (indicated by yellow middle dot 62). The left most image of the next row is of low quality (indicated by right most red dot 64), etc.

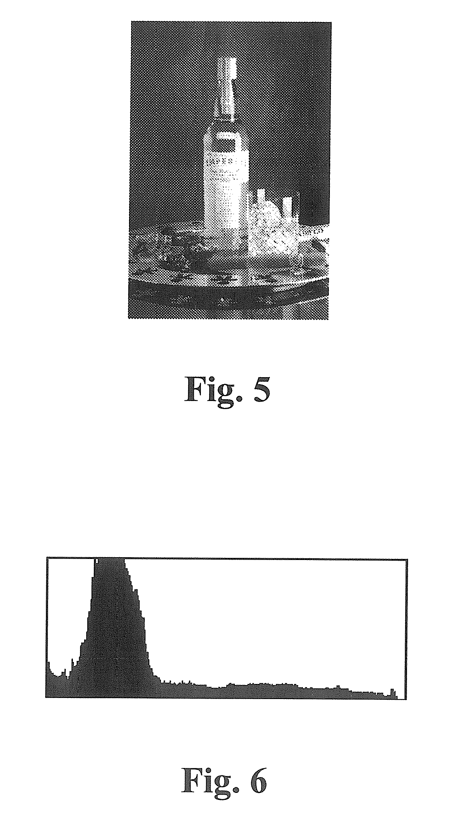

As already mentioned, the image quality factors may be calculated from a histogram of a recorded image as illustrated in Figs. 5 and 6. For example, in an over-exposed image, the histogram-distribution will move to the right and pixels will be missing at the low end of the histogram, and in an under-exposed image, the histogram-distribution will move to the left and pixels will be missing at the high end of the histogram.

In the illustrated embodiment, an image is considered over-exposed if more than 5 % of the pixels are over-exposed. An image is considered under-exposed if the 95 % percentile of pixel intensities is below half the maximum pixel intensity.

## Claims

1. An electronic camera with a solid state imaging device, a memory for storage of images recorded with the imaging device, and a controller that is adapted to store an image quality parameter value together with a respective image in combination with the image for subsequent access of the combination for comparison of a plurality of combinations.

2. An electronic camera according to claim 1, further comprising a user interface with a user interface element for user selection of an image quality parameter value for storage with the respective image.

3. An electronic camera according to claim 1 or 2, wherein the controller is further adapted to calculate an image quality parameter value for a recorded image base on recorded image intensities.

4. An electronic camera according to any of claims 1-3, further comprising a light meter, and wherein the controller is further adapted to calculate an image quality parameter value for a recorded image based on a respective light meter reading and recorded image intensities.

5. An electronic camera according to any of the preceding claims, wherein the controller is further adapted to incorporate camera monitoring indicator signals in the calculated image quality parameter value.

6. An electronic camera according to any of the preceding claims, wherein the controller is further adapted to store a symbol indicating whether the user of the camera has adjusted the stored image quality parameter value.

7. An electronic camera according to any of the preceding claims, further comprising a display for displaying recorded images together with a symbol indicating its image quality parameter value.

8. An electronic camera according to any of the preceding claims, wherein the controller is further adapted to automatically delete an image with the lowest quality parameter value before storage of a new image when there is no free memory space available for the new image.

9. An electronic camera according to any of the preceding claims, further comprising a computer interface, wherein the controller is adapted to transfer images with their respective image quality parameter values from the memory to a computer via the interface.
